# EUROPÄISCHE PATENTSCHRIFT

(11) **EP 0 991 674 B1**
(45) Veröffentlichungstag und Bekanntmachung des Hinweises auf die Patenterteilung: **03.04.2002**
(21) Anmeldenummer: 98936305.6
(22) Anmeldetag: 05.06.1998
(51) Int. Cl.: C08F 4/62, C08F 12/04, C08F 10/00, C08F 110/00, C08F 210/00, C08F 12/08

(54) **CYCLOPENTA[I]PHENANTHREN-METALLKOMPLEX-KATALYSATORSYSTEME**
CYCLOPENTA[I]PHENANTHRENE METAL COMPLEX CATALYST SYSTEMS
SYSTEMES CATALYSEURS CONSTITUES DE CYCLOPENTA [I] PHENANTHRENE ET D'UN COMPLEXE METALLIQUE

(30) Priorität: 18.06.1997 DE 19725647
(43) Veröffentlichungstag der Anmeldung: 12.04.2000
(73) Patentinhaber: BASF AKTIENGESELLSCHAFT, 67056 Ludwigshafen (DE)
(72) Erfinder: WÜNSCH, Josef, D-67105 Schifferstadt (DE); BRINTZINGER, Hans-Herbert, CH-8274 Tägerwilen (CH); SCHNEIDER, Nicole, D-78467 Konstanz (DE); PROSENC, Marc, D-78467 Konstanz (DE)
(86) Internationale Anmeldenummer: EP9803370
(87) Internationale Veröffentlichungsnummer: WO9857995

(56) Entgegenhaltungen:
- DE-A- 19 509 785
- B. ELIASSON ET AL: "1-H and 13-C Nuclear Magnetic Resonance Reinvestigation of the Dibenzo(a,c)cyclononatetraenyl Anion and Its 5,9-Diphenyl Derivative" J.0RG.CHEM., Bd. 54, 1989, Seiten 171-175, XP002089067 in der Anmeldung erwähnt

## Beschreibung

Die vorliegende Erfindung betrifft ein Verfahren zur Herstellung von Polymeren, welchen Monomere mit C=C-Doppelbindung zugrunde liegen, durch Homo- oder Copolymerisation dieser Monomeren in Gegenwart eines Katalysatorsystems aus einem Metallocenkomplex A) und einer metalloceniumionenbildenden Verbindung B) und gegebenenfalls einer metallorganischen Verbindung der I., II., oder III. Hauptgruppe des Periodensystems der Elemente C), Katalysatorsysteme, die zur Polymerisation von Monomeren mit C=C-Doppelbindung geeignet sind, enthaltend als aktive Bestandteile
A) einen Metallocenkomplex der allgemeinen Formel (I) 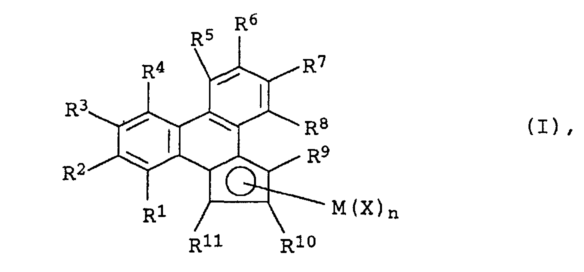 in der die Substituenten und Indices folgende Bedeutung haben:
   - R¹ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
   - mit R¹²: C₁- bis C₁₀-Alkyl, C₆- bis C₁₅-Aryl oder C₃- bis C₁₀-Cycloalkyl,
   - M: ein Metall der III. bis VI. Nebengruppe des Periodensystems der Elemente oder ein Metall der Lanthanidenreihe
   - X: gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
   und
   - n: 1, 2, 3, 4 oder 5, wobei n der Wertigkeit von M abzüglich der Zahl 1 entspricht,
B) eine metalloceniumionenbildende Verbindung und gegebenenfalls
C) eine metallorganische Verbindung der I., II., oder III. Hauptgruppe des Periodensystems der Elemente,
   Metallocenkomplexe der allgemeinen Formel (I) 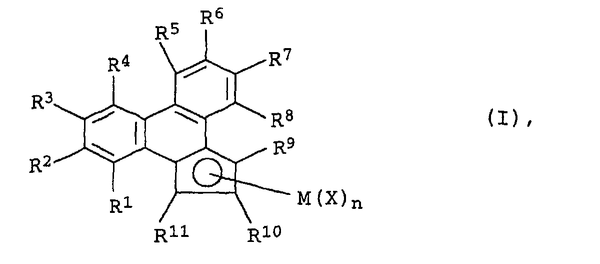 in der die Substituenten und Indices folgende Bedeutung haben:
   - R¹ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
   - mit R¹²: C₁- bis C₁₀-Alkyl, C₆- bis C₁₅-Aryl oder C₃- bis C₁₀-Cycloalkyl,
   - M: ein Metall der III. bis VI. Nebengruppe des Periodensystems der Elemente oder ein Metall der Lanthanidenreihe
   - X: gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
   und
   - n: 1, 2, 3, 4 oder 5, wobei n der Wertigkeit von M abzüglich der Zahl 1 entspricht.

Weiterhin betrifft die vorliegende Erfindung Polymere, welchen Monomere mit C=C-Doppelbindung zugrunde liegen, erhältlich durch Homo- oder Copolymerisation dieser Monomeren in Gegenwart eines Katalysatorsystems aus einem Metallocenkomplex A) und einer metalloceniumionenbildenden Verbindung B) und gegebenenfalls einer metallorganischen Verbindung der I., II., oder III. Hauptgruppe des Periodensystems der Elemente C), sowie Fasern, Folien und Formkörper aus diesen Polymeren und die Verwendung von Metallocenkomplexen (I) als Komponente in Katalysatorsystemen oder als Katalysator.

Syndiotaktische Polymerisate aus Styrol sind bekannt. Sie können aufgrund ihres Eigenschaftsprofils, wie hohe Härte, hohe Steifigkeit, Dimensionsstabilität und geringe Dielektrizitätskonstante, beispielsweise als elektrische oder mechanische Bauteile Verwendung finden.

Der vorliegenden Erfindung lag die Aufgabe zugrunde neue Katalysatorsysteme zu finden, welche bei relativ hohen Polymerisationstemperaturen, vorzugsweise über 60°C, eingesetzt werden können, eine hohe Polymerisationsaktivität haben und ein Polymer mit einem hohen Anteil, vorzugsweise über 80 % (bestimmt durch Extraktion des Rohpolymeren mit n-Butanon) an syndiotaktischen Struktureinheiten und hohem Molekulargewicht M_{w} liefern.

Demgemäß wurde ein Verfahren zur Herstellung von Polymeren, welchen Monomere mit C=C-Doppelbindung zugrunde liegen, durch Homo- oder Copolymerisation dieser Monomeren in Gegenwart eines Katalysatorsystems aus einem Metallocenkomplex A) und einer metalloceniumionenbildenden Verbindung B) und gegebenenfalls einer metallorganischen Verbindung der I., II., oder III. Hauptgruppe des Periodensystems der Elemente C), dadurch gekennzeichnet, daß man als Metallocenkomplex A) eine Verbindung der allgemeinen Formel (I) 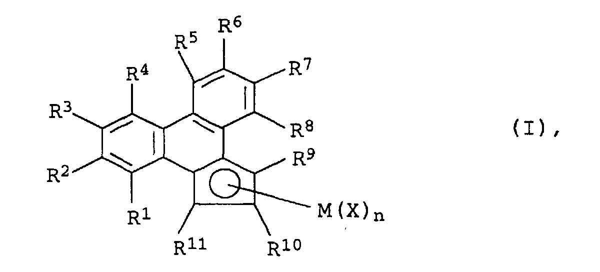 in der die Substituenten und Indices folgende Bedeutung haben:
- R¹ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
- mit R¹²: C₁- bis C₁₀-Alkyl, C₆- bis C₁₅-Aryl oder C₃- bis C₁₀-Cycloalkyl,
- M: ein Metall der III. bis VI. Nebengruppe des Periodensystems der Elemente oder ein Metall der Lanthanidenreihe
- X: gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
und
- n: 1, 2, 3, 4 oder 5, wobei n der Wertigkeit von M abzüglich der Zahl 1 entspricht,
einsetzt.

Katalysatorsysteme, die zur Polymerisation von Monomeren mit C=C-Doppelbindung geeignet sind, enthaltend als aktive Bestandteile
A) einen Metallocenkomplex der allgemeinen Formel (I) 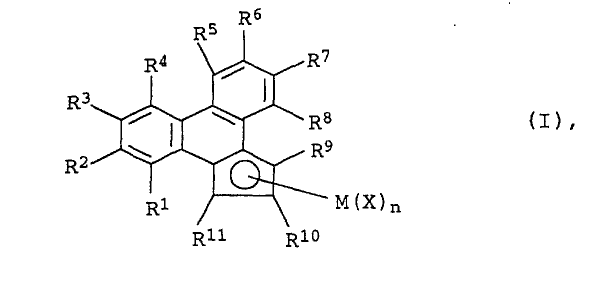
B) eine metalloceniumionenbildenden Verbindung und gegebenenfalls
C) eine metallorganischen Verbindung der I., II., oder III. Hauptgruppe des Periodensystems der Elemente, weiterhin Metallocenkoplexe der allgemeinen Formel (I) 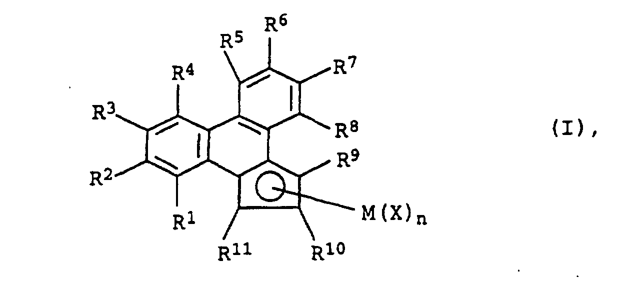 in der die Substituenten und Indices folgende Bedeutung haben:
   - R¹ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
   - mit R¹²: C₁- bis C₁₀-Alkyl, C₆- bis C₁₅-Aryl oder C₃- bis C₁₀-Cycloalkyl,
   - M: ein Metall der III. bis VI. Nebengruppe des Periodensystems der Elemente oder ein Metall der Lanthanidenreihe
   - X: gleich oder verschieden und Wasserstoff,. Halogen, C₁- bis C₁₀-Alkyl, C₆- bis C₁₅-Aryl, C₁- bis C₁₀-Alkoxy oder C6- bis C₁₅-Aryloxy
   und
   - n: 1, 2, 3, 4 oder 5, wobei n der Wertigkeit von M abzüglich der Zahl 1 entspricht,
sowie Polymere, welchen Monomere mit C=C-Doppelbindung zugrunde liegen erhältlich durch Homo- oder Copolymerisation dieser Monomeren in Gegenwart eines Katalysatorsystems aus einem Metallocenkomplex A) und einer metalloceniumionenbildenden Verbindung B) und gegebenenfalls einer metallorganischen Verbindung der I., II., oder III. Hauptgruppe des Periodensystems der Elemente C), wobei man als Metallocenkomplex A) eine Verbindung der allgemeinen Formel (I) 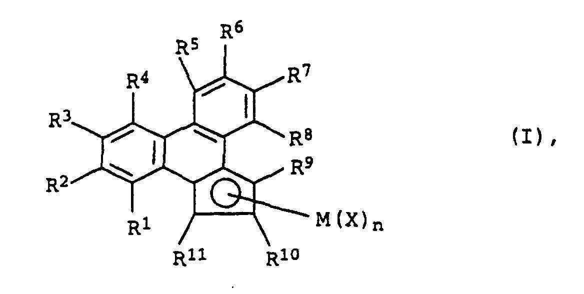 in der die Substituenten und Indices folgende Bedeutung haben:
- R¹ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
- mit R¹²: C₁- bis C₁₀-Alkyl, C₆- bis C₁₅-Aryl oder C₃- bis C₁₀-Cycloalkyl,
- M: ein Metall der III. bis VI. Nebengruppe des Periodensystems der Elemente oder ein Metall der Lanthanidenreihe
- X: gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
und
- n: 1, 2, 3, 4 oder 5, wobei n der Wertigkeit von M abzüglich der Zahl 1 entspricht,
einsetzt und ferner Fasern, Folien und Formkörper aus den erfindungsgemäßen Polymeren sowie die Verwendung der erfindungsgemäßen Metallocenkomplexe (I) als Komponente in Katalysatorsystemen oder als Katalysator, gefunden.

Als Monomere eignen sich generell alle, die eine polymerisierbare Kohlenstoff-Kohlenstoff-(C=C)Doppelbindung haben. Beispiele hierfür sind lineare Alkene mit 2 bis 20 Kohlenstoffatomen, wobei die Doppelbindung innenständig oder terminal angeordnet sein kann, cyclische oder bicyclische Alkene mit 3 bis 20 Kohlenstoffatomen, wobei die C=C-Doppelbindung endo- oder exoständig sein kann. Die linearen und cyclischen Alkene können mit funktionellen Gruppen, wie Halogen, Estergruppe, -COOH-Gruppe oder der Nitrilgruppe substituiert sein. Als Beispiele solcher Monomerer seien genannt Vinylchlorid, Ethylacrylat, Methylacrylat, Methylmethacrylat, Acrylnitril. Vorzugsweise handelt es sich bei den linearen und cyclischen Alkenen um Kohlenwasserstoffe ohne Heteroatome. Beispiele derartiger Monomerer sind C₂- bis C₂₀-Alk-1-ene, wie Ethylen, Propylen, 1-Buten, 1-Hexen, 1-Octen, 1-Decen, Cycloalkene wie Cyclopenten, Cyclohexen, Bicycloalkene, wie Norbornen oder auch Diene wie 1,3-Butadien, Cyclopentadien, Norbornadien. Bevorzugte nichtaromatische Monomere sind Ethylen, Propylen, 1,3-Butadien.

Bevorzugte aromatische Monomere im Sinne der Erfindung sind vinylaromatische Verbindungen der allgemeinen Formel (II) 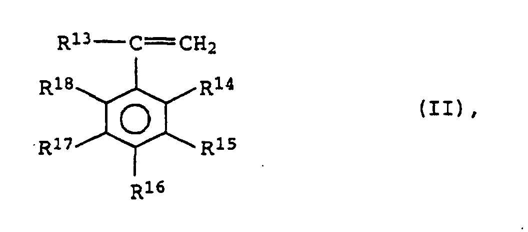 in der die Substituenten folgende Bedeutung haben:
- R¹³: Wasserstoff oder C₁- bis C₄-Alkyl,
- R¹⁴ bis R¹⁸: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt werden vinylaromatische Verbindungen der Formel II eingesetzt, in denen
- R¹³: Wasserstoff bedeutet
und
- R¹⁴ bis R¹⁸: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel II beispielsweise Naphthalinderivate oder Anthracenderivate ergeben.

Beispiele für solche bevorzugten Verbindungen II sind:

Styrol, p-Methylstyrol, p-Chlorstyrol, 2,4-Dimethylstyrol, 1,4-Divinylbenzol, 4-Vinylbiphenyl, 2-Vinylnaphthalin oder 9-Vinylanthracen.

Es können auch Mischungen verschiedener vinylaromatischer Verbindungen II eingesetzt werden, vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel II ist an sich bekannt und beispielsweise in Beilstein 5, 367, 474, 485 beschrieben.

Als Monomere können auch verzweigte Monomere mit mindestens zwei vinylaromatischen funktionellen Resten, beispielsweise Tetrakis(4-vinylbenzyl)titan oder Tetrakis(4-vinylbenzyl)silan verwendet werden. Weitere derartige Monomere sind in der älteren deutschen Patentanmeldung 196 34 375.5-44 (WO-A-9808881) beschrieben.

Generell können die Monomere auch als Mischung eingesetzt werden, wobei die Mengenverhältnisse im allgemeinen nicht kritisch sind.

Die Komponente A) des erfindungsgemäßen Katalysatorsystems ist ein Metallocenkomplex der allgemeinen Formel (I) 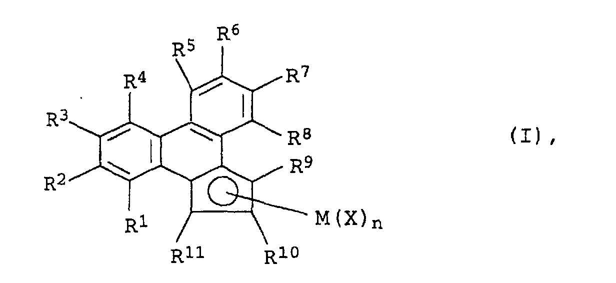 in der die Substituenten und Indices folgende Bedeutung haben:
- R¹ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
- mit R¹²: C₁- bis C₁₀-Alkyl, C6- bis C₁₅-Aryl oder C₃- bis C₁₀-Cycloalkyl,
- M: ein Metall der III. bis VI. Nebengruppe des Periodensystems der Elemente oder ein Metall der Lanthanidenreihe
- X: gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
und
- n: 1, 2, 3, 4 oder 5, wobei n der Wertigkeit von M abzüglich der Zahl 1 entspricht.

Besonders bevorzugte Metallocenkomplexe der allgemeinen Formel I sind solche, in denen
- M: für ein Metall der IV. Nebengruppe des Periodensystems der Elemente steht, insbesondere für Titan,
- X: C₁- bis C₁₀-Alkyl, C₁- bis C₁₀-Alkoxy oder Halogen bedeuten und
- n: für die Zahl 3 steht.

Mischungen verschiedener Metallocenkomplexe können auch eingesetzt werden.

Beispielsweise seien als erfindungsgemäße Metallocenkomplexe (I) genannt Cyclopenta[I]phenanthrentitantrichlorid, 2-methylcyclopenta[I]phenanthrentitantrichlorid, 2-phenylcyclopenta[I]phenanthrentitantrichlorid.

Ausgangspunkt für die Synthese der erfindungsgemäßen Metallocenkomplexe (I) sind im allgemeinen 9,10-Phenanthrenchinon oder ringsubstituierte Derivate dieses Grundkörpers. Das 9,10-Phenanthrenchinon oder dessen Derivat wird dann in der Regel nach B Elliasson, J. Org. Chem. (1989), Seite 171 bis 175 und A. C. Cope, J. Am. Chem. Soc. (1956) Seite 2547 bis 2551 zu der Keton-Vorstufe, dem 2,3-Dihydro-2-oxo-1H-cyclopenta[I]phenanthren oder dessen Derivate, und schließlich durch Reduktion der Ketogruppe mit Organometallverbindungen oder Wasserstoff-Reduktionsmittel zum Kohlenwasserstoff (III) oder seinen Tautomeren umgesetzt.

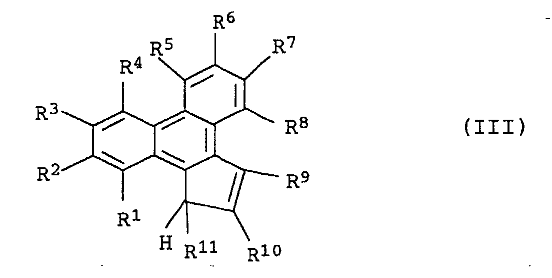

Die erfindungsgemäßen Metallocenkomplexe (I) erhält man im allgemeinen, indem man den Kohlenwasserstoff (III) mit einer starken, vorzugsweise metallorganischen Base, beispielsweise n-Butyllithium, deprotoniert, anschließend mit einem Silylierungsreagenz, vorzugsweise Trimethylchlorsilan umsetzt und schließlich mit dem Übergangsmetallhalogenid, vorzugsweise einem Halogenid der IV. Nebengruppe des Periodensystems der Elemente, wie Titantetrachlorid, Zirconiumtetrachlorid oder Hafniumtetrachlorid umsetzt.

Die weiteren Bedingungen für diese Umsetzungen sind dem Fachmann bekannt und z.B. in J. Organomet. Chem. (1989), Vol. 369, Seite 359-370, beschrieben. Vorzugsweise wird in organischen Lösungsmitteln, wie Diethylether, Tetrahydrofuran, Toluol, Methylenchlorid, bei einer Umsetzungstemperatur im Bereich von -78°C bis 150°C gearbeitet.

Alle obengenannten Reaktionsstufen können ohne Isolierung und Reinigung der Zwischenstufen ausgeführt werden, vorzugsweise werden die Zwischenstufen jedoch isoliert und gereinigt.

Als metalloceniumionenbildende Verbindungen B) können die Katalysatorsysteme offenkettige oder cyclische Aluminoxanverbindungen enthalten. 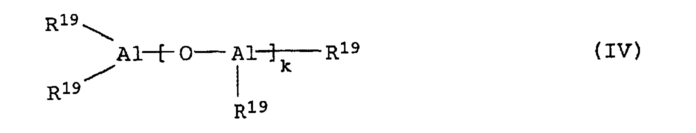 oder 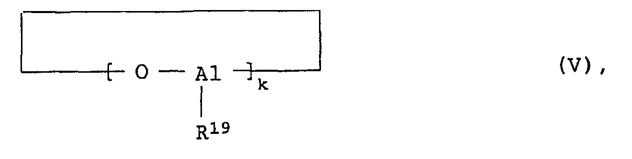
- wobei R¹⁹: eine C₁- bis C₄-Alkylgruppe bedeutet, bevorzugt Methyl- oder Ethylgruppe und k für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß k als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, vorzugsweise im Bereich von 10:1 bis 10⁴:1 und insbesondere 20:1 bis 9000:1 liegt.

Als metalloceniumionenbildende Verbindung B) können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.

Als starke neutrale Lewissäuren sind Verbindungen der allgemeinen Formel VI

M¹X¹X²X³ (VI)

bevorzugt, in der
- M¹: ein Element der III. Hauptgruppe des Periodensystems bedeutet, insbesondere B, A1 oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel VI, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissauren Kationen sind Verbindungen der allgemeinen Formel VII

[(Y^{a+})Q₁Q₂...Q_{z}]^{d+} (VII)

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das l,l'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.

Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Weiterhin können die erfindungsgemäßen Katalysatorsysteme eine metallorganische Verbindung der I., II., oder III. Hauptgruppe des Periodensystems als Komponente C) enthalten. Beispielsweise seien genannt n-Butyllithium, Butyloctylmagnesium, Triethylbor vorzugsweise Aluminiumverbindungen.

Die Aluminiumverbindungen können z.B. durch die allgemeine Formel VIII

AlR²⁰R²¹R²² (VIII),

in der
- R²⁰ bis R²²: für Wasserstoff, Fluor, Chlor, Brom, Jod oder C₁- bis C₁₂-Alkyl stehen, bevorzugt für C₁- bis C₈-Alkyl,
charakterisiert werden.

Vorzugsweise sind die Reste R²⁰ bis R²¹ gleich und stehen für C₁-C₆-Alkyl wie Methyl, Ethyl, Isobutyl oder n-Hexyl, R²² bedeutet vorzugsweise Wasserstoff, als Beispiel sei Diisobutylaluminiumhydrid genannt.

Im allgemeinen liegt das molare Verhältnis C):I) im Bereich von 1:1 bis 2000:1, vorzugsweise 10:1 bis 800:1.

Im allgemeinen liegt das molare Verhältnis C):B) und hier insbesondere C):Aluminium IV, V im Bereich von 0,001:1 bis 10000:1, vorzugsweise 0,01:1 bis 5000:1.

Die erfindungsgemäßen Katalysatorsysteme oder mindestens eine ihrer Komponenten A) bis C), beispielsweise die Metallocenkomplexe (I), können ungeträgert oder geträgert eingesetzt werden.

Geeignete Trägermaterialien sind beispielsweise Kieselgele, bevorzugt solche der Formel SiO₂ · bAl₂O₃, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.

Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylalkohol, Polystyrol, syndiotaktisches Polystyrol, Polybutadien, Polycarbonate oder deren Copolymere.

Das erfindungsgemäße Polymerisationsverfahren läßt sich grundsätzlich im Temperaturbereich von -78°C bis 150°C, vorzugsweise 0 bis 120°C durchführen, wobei sich die Polymerisationstemperatur auch zeitlich und/oder räumlich ändern kann. Es hat sich als vorteilhaft herausgestellt, die Polymerisation bei einer Temperatur im Bereich von 60 bis 150°C, vorzugsweise im Bereich von 70 bis 150°C durchzuführen. Es war unerwartet, daß bei derartig hohen Polymerisationstemperaturen die Aktivität des erfindungsgemäßen Katalysatorsystems, errechnet als g Polymer/mol Übergangsmetall x mol Monomer x h, und das Molekulargewicht Mw des Polymerisats bestimmt mit GPC wie im folgenden definiert weiterhin auf hohem Niveau liegt und zudem die Syndiotaktizität des Polymerisats, gemessen mittels Extraktion mit n-Butanon, wie bereits beschrieben, immer noch mehr als 40 %, vorzugsweise mehr als 80 % beträgt.

Im allgemeinen wird das erfindungsgemäße Verfahren bei einem Druck von 0,5 bis 300 bar, vorzugsweise 1 bis 200 bar, insbesondere 1 bis 20 bar durchgeführt.

Das erfindungsgemäße Verfahren kann kontinuierlich oder diskontinuierlich durchgeführt werden. Es haben sich verschiedene Verfahrensvarianten als geeignet erwiesen.

Bei der Polymerisation in Lösung oder in Monomer-Masse geht man vorzugsweise so vor, daß man das Monomere, vorzugsweise die bereits definierte vinylaromatische Verbindung (II), insbesondere Styrol, vorlegt, vorzugsweise auf eine Temperatur im Bereich von 60 bis 100°C erwärmt und dann die metalloceniumionenbildende Verbindung B), vorzugsweise Methylaluminoxan oder Tris(pentafluorphenyl)boran oder N,N-dimethylaniliniumtetrakispentafluorphenylborat oder Gemische aus diesen Komponenten B) und gegebenenfalls noch die Komponente C) hinzufügt. Anschließend gibt man dann die Komponente A), gegebenenfalls in einem Lösungsmittel hinzu. Man kann aber auch die Metallocenkomplexe A) zuvor mit der metalloceniumionenbildenden Verbindung B) mischen und diese Mischung in den Reaktor geben. Im allgemeinen wird dann über einen Zeitraum von 10 bis 90 Minuten polymerisiert und die Polymerisation durch Zugabe von Methanol abgebrochen, das Polymerisat mit Methanol gewaschen und bei 40 bis 100°C getrocknet.

Das erfindungsgemäße Verfahren kann auch als Dispersionspolymerisation, wie in DE-A 195 42 356 beschrieben, ausgeführt werden.

Als Dispergierhilfsmittel eignen sich beispielsweise Styrol-Dien-Zweiblockcopolymere der Styrol-Dien-Styrol-Dreiblockcopolymere und als Dispergiermedium sind aliphatische Kohlenwasserstoffe bevorzugt.

Vorzugsweise wird das Dispergierhilfsmittel in einer Menge von 1 bis 10 Gew.-%, bezogen auf die eingesetzte Menge an vinylaromatischen Verbindungen, verwendet. Zweckmäßig wird es der zu polymerisierenden Dispersion gelöst im vinylaromatischen Monomeren zugesetzt.

Geeignete Zweiblockcopolymere können aus einem Polymerblock aus Styrol und einem Polymerblock aus Butadien, bevorzugt 1,4-Polybutadien, bestehen. Die Summe der Gew.-% der Blöcke aus Styrol und aus Butadien beträgt 100, wobei die Zusammensetzung variieren kann. Der Styrolblock kann 10 bis 90 Gew.-%, bevorzugt 20 bis 80 Gew.-% ausmachen, entsprechend der Butadienblock 90 bis 10 Gew.-%, vorzugsweise 80 bis 20 Gew.-%. Geeignet sind auch Styrol-Butadien-Zweiblockcopolymere, die hydriert sein können.

Von den Styrol-Dien-Styrol-Dreiblockcopolymeren eignen sich beispielsweise solche, bei denen der Dien-Block aus Polybutadien oder Polyisopren besteht und wobei der Dien-Block hydriert oder unhydriert sein kann.

Zweiblock- und Dreiblockcopolymere sowie Verfahren zu ihrer Herstellung sind an sich bekannt und beispielsweise in Thermoplastic Elastomers (1987), N.R. Legge et al (ed.) beschrieben. Geeignete Copolymere sind auch im Handel erhältlich, beispielsweise Kraton® -Typen (Fa. Shell).

Von den aliphatischen Kohlenwasserstoffen, die als Dispergiermedium eingesetzt werden können, sind solche mit 4 bis 10 C-Atomen besonders geeignet, beispielsweise Butan, iso-Butan, Pentan, Hexan und Heptan oder Kohlenwasserstoffgemische.

Bevorzugt geht man bei dem erfindungsgemäßen Verfahren so vor, daß man das Dispergierhilfsmittel in der vinylaromatischen Verbindung löst, das Dispergiermedium zugibt, bevorzugt in einer Menge von 1 bis 10 Gew.-%, bezogen auf die vinylaromatische Verbindung, dann die olefinische Verbindung durchleitet und das Metallocenkatalysatorsystem hinzugibt.

Die Polymerisation kann durch Zugabe von protischen Verbindungen, wie Methanol, abgebrochen werden und das Dispergiermedium durch Temperaturerhöhung entfernt oder gegebenenfalls im Kreisprozeß geführt werden.

Weiterhin kann das erfindungsgemäße Verfahren als Suspensionspolymerisation, wie in DE-A 195 09 785 beschrieben, durchgeführt werden. Bei diesem Verfahren wird im allgemeinen das Monomere oder Gemische der Monomere, vorzugsweise die vinylaromatische Verbindung (II), bei einem Druck von 5 bis 300 bar, vorzugsweise 6 bis 100 bar, insbesondere 7 bis 50 bar in Gegenwart von aliphatischen C₁- bis C₄-Kohlenwasserstoffen polymerisiert, wobei lineare oder verzweigte aliphatische C₃- und C₄-Kohlenwasserstoffe, wie Propan oder iso-Butan, bevorzugt sind und das erfindungsgemäße Katalysatorsystem oder mindestens eine seiner Komponenten A), B), C) in der Regel in geträgerter Form, vorzugsweise auf porösem Silicagel, vorliegt.

Das erfindungsgemäße Verfahren kann in unterschiedlichen Reaktoren durchgeführt werden. Es kommen in Frage Rührkessel, Kneter, sowie vorzugsweise Extruder.

Eine besondere Ausgestaltung des Verfahrens besteht darin, es unter Verwendung eines gleichsinnigdrehenden, dichtkämmenden und damit selbstreinigenden Doppelschneckenextruders, vorzugsweise einstufig, durchzuführen.

Die Reaktionstemperatur liegt im allgemeinen zwischen -78 und 150°C, bevorzugt zwischen 0° und 150°C, insbesondere zwischen 60 und 150°C. Es ist aber auch möglich, daß ein Temperaturgradient von 0 bis 150°C über temperierbare Gehäuseummantelungen um das Reaktionsrohr angelegt wird.

Der Extruder kann aus mehreren Einzelzonen bestehen, die unterschiedlich temperiert werden können.

Der Außendurchmesser der gleichsinnigdrehenden, bevorzugt zweigängigen Knet- und Förderelemente der Doppelschneckenextruder liegt vorzugsweise im Bereich von 25 bis 70 mm, insbesondere 30 bis 58 mm.

Die freien Spalträume zwischen Extrudergehäuse und Schneckenelement liegen im Bereich von 0,2 bis 0,8 mm, insbesondere 0,3 bis 0,5 mm.

Die Schneckendrehzahl kann im Bereich von 3 bis 500 Umdrehungen pro Minute liegen, vorzugsweise 5 bis 30 Umdrehungen pro Minute.

Die mittlere Verweilzeit im Extruder kann 0,1 bis 240 Minuten betragen, vorzugsweise 2 bis 20 Minuten.

Die mittlere Verweilzeit im Extruder kann über die Anzahl der Gehäuseblöcke reguliert werden. Die Anzahl der Gehäuseblöcke liegt vorzugsweise im Bereich von 6 bis 20, insbesondere von 8 bis 12. Besonders bevorzugt werden 10 Gehäuseblöcke verwendet, wobei im ersten Gehäuseblock eine Rückentgasung stattfindet, in den zweiten die Einsatzstoffe dosiert werden, die Gehäuseblöcke 3 bis 8 sind Reaktionsgehäuseblöcke, die Gehäuseblöcke 9 und 10 können mit anderer Temperatur beheizt werden und der Gehäuseblock 10 dient als Austragsgehäuse.

Vorzugsweise wird das Verfahren so durchgeführt, daß die vinylaromatische Verbindung und gegebenenfalls weitere bereits definierte Monomere, die metalloceniumionenbildende Verbindung B) und gegebenenfalls die Komponente C) unter Inertgasatmosphäre gemischt und auf den ersten Gehäuseblock des Extruders zudosiert werden. Parallel dazu kann ebenfalls auf den ersten Gehäuse-block (Zone) eine Lösung oder Suspension des Übergangsmetallkomplexes A) zudosiert werden.

Als Lösung- bzw. Suspensionsmittel sind cyclische und acyclische Kohlenwasserstoffe wie Butane, Pentane, Hexane oder Heptane zu nennen, weiterhin aromatische Kohlenwasserstoffe wie Benzol, Toluol oder Ethylbenzol sowie sauerstoffhaltige Kohlenwasserstoffe wie Tetrahydrofuran, halogenhaltige Kohlenwasserstoffe wie Dichlormethan oder stickstoffhaltige Kohlenwasserstoffe wie N-Methylpiperidin sowie Mischungen hiervon.

Vorzugsweise wird die Dosiermenge so gewählt, daß 500 bis 2000 g/h der Mischung aus vinylaromatischer Verbindung gegebenenfalls weiteren, bereits definierten Monomeren, Komponenten B) und ggf. C) zugeführt werden und 100 bis 200 cm³/h an der Lösung oder Suspension des Metallkomplexes.

Die Polymerisation wird vorzugsweise in der vinylaromatischen Verbindung und gegebenenfalls weiteren, bereits definierten Monomeren als Reaktionsmedium, d.h. in Masse durchgeführt.

Das Verfahren ist technisch einfach durchführbar, es werden hohe Umsätze erzielt, die Gefahr des Verklebens bzw. des Zuwachsens der Austrittsöffnungen des Extruders ist gering.

Eine weiterhin bevorzugte Ausführungsform besteht darin, daß man die Reaktionsmischung, enthaltend als Komponente vinylaromatische Monomere II, gegebenenfalls weitere, bereits definierte Monomere und das Katalysatorsystem aus A), B) und gegebenenfalls C) gegebenenfalls durch Vormischen aktiviert und anschließend in einem Misch-Kneter polymerisiert.

Vorzugsweise erfolgt das Vormischen bei einer Temperatur, bei der die Reaktionsmischung noch flüssig ist und die Polymerisation nicht einsetzt. In Abhängigkeit der für die Reaktionsmischung verwendeten Komponenten liegt diese Temperatur in einem Bereich von -30 bis +140, bevorzugt von 0 bis 70 und besonders bevorzugt von 15 bis 30°C. Weiterhin ist bei der erfindungsgemäßen Aktivierung die Vormischung vorzugsweise so durchzuführen, daß die Verweilzeit und die Temperatur so gewählt ist, daß neben dem Einsetzen der Polymerisationsreaktion auch eine Schädigung des Katalysatorsystem trotz einer für die Aktivierung ausreichender Durchmischung ausbleibt.

Die Aktivierung durch Vorvermischung der Reaktionsmischung erfolgt vorteilhafterweise zeitlich kurz oder unmittelbar vor der Polymerisationsreaktion. Der Zeitraum zwischen Aktivierung durch Vormischung und Polymerisation beträgt 0 bis 60, bevorzugt 0,01 bis 45 und besonders bevorzugt 0,1 bis 30 min, wobei es bevorzugt ist, daß die Vorvermischung im wesentlichen ohne daß eine Reaktion einsetzt erfolgt.

Das Verfahren wird vorteilhafterweise lösungsmittelfrei durchgeführt. In einer besonders bevorzugten Ausführungsform des Verfahrens wirken die eingesetzten Monomere anfänglich als Lösungsmittel. Zudem ist es vorteilhaft, das verfahren in einer Inertgasatmosphäre, beispielsweise aus Stickstoff oder Argon, möglichst unter Ausschluß von Feuchtigkeit durchzuführen. In den Inertgasstrom kann auch Wasserstoff eindosiert werden.

Die Vorvermischung wird vorzugsweise so vorgenommen, daß keine Reaktion erfolgt. Weiterhin ist es vorteilhaft, daß die Polymerisate so anfallen, daß sie im wesentlichen unmittelbar nach der Polymerisation weiterverarbeitet, vorzugsweise extrudiert werden können. Dieses ist vorzugsweise der Fall, wenn die Polymerisation im Verfahren zu hohen Ausbeuten getrieben wird und demgemäß das Polymerisat einen geringen Restmonomergehalt besitzt. Dieser Restmonomergehalt liegt unter 10, bevorzugt unter 5 und besonders bevorzugt unter 3 Gew.-%, bezogen auf das Gewicht des Polymerisats. Der im Polymerisat noch verbliebene Rest- monomergehalt kann beispielsweise durch Abdampfen oder durch Anlegen eines Vakuums entfernt werden. Vorzugsweise erfolgt das erfindungsgemäße Verfahren in einem Misch-Knet-Reaktor mit daran anschließendem Extruder, ohne daß weitere Aufarbeitungsschritte, beispielsweise das Abdestillieren von größeren Restmonomermengen, die insbesondere bei geringen Umsätzen anfallen, erfolgen muß. Damit erlaubt das Verfahren eine Weiterverarbeitung des Polymerisats im wesentlichen unmittelbar nach dessen Herstellung.

Wird die erfindungsgemäße Polymerisation in Gegenwart von verzweigten Monomeren mit mindestens zwei vinylaromatischen funktionellen Resten, beispielsweise Tetrakis (4-vinylbenzyl)titan oder Tetrakis(4-vinylbenzyl)silan durchgeführt, so erhält man im allgemeinen Sternpolymere, wie in der älteren deutschen Patentanmeldung 196 34 375.5-44 beschrieben.

Üblicherweise haben die mit dem erfindungsgemäßen Verfahren erhältlichen linearen Polymeren ein Molekulargewicht Mw, bestimmt mit der Methode der Gelpermeationschromatographie bei 135°C und in 1,2,4-Trichlorbenzol als Lösungsmittel gegen Polystyrolstandard im Bereich von 20000 bis 2x10⁶, vorzugsweise im Bereich von 50000 bis 10⁶.

Die Syndiotaktitzität der mit dem erfindungsgemäßen Verfahren erhältlichen Polymeren liegt im allgemeinen im Bereich von 30 bis 100 %, vorzugsweise im Bereich von 60 bis 100 %, insbesondere 80 bis 100 % und ganz besonders bevorzugt im Bereich von 90 bis 100 %. Die Syndiotaktizität wird durch 24 stündige Extraktion einer ausgeheizten und abgewogenen Menge Polymerisat mit 2-Butanon, Trocknung und Auswaage des unlöslichen Teils des eingesetzten Polymerisats bestimmt.

Der Schmelzpunkt der erfindungsgemäßen Polymerisate, bestimmt mit der Methode der Differential Scanning Calorimetry (DSC) nach ISO 3146, liegt im Bereich von 250 bis 285°C, vorzugsweise im Bereich von 260 bis 280°C.

Das erfindungsgemäße Polymerisationsverfahren kann bei hohen Temperaturen durchgeführt werden, liefert dennoch Polymere mit hohem Molekulargewicht Mw und einem hohen Grad an Syndiotaktizität.

### Beispiele

2,3-Dihydro-2-oxo-lH-cyclopenta[I]phenanthren wurde nach B. Elliasson, J. Org. Chem. (1989), Seite 171 bis 175 und A. C. Cope, J. Am. Chem. Soc. (1956) Seite 2547 bis 2551 hergestellt. Herstellung von 3-Hydro-2-hydroxy-2-methyl-lH-cyclopenta[I]phenanthren

8,83 ml einer 3 M Lösung von Methylmagnesiumbromid in Diethylether (26,49 mmol) wurden unter Schutzgas zu einer Suspension von 5,00 g 2,3-Dihydro-2-oxo-1H-cyclopenta[I]phenanthren (21,19 mmol) in 20 ml Diethylether zugetropft. Nach 3 h Kochen am Rückfluß wurde das Produkt durch vorsichtige Zugabe von 10 ml 2 N Salzsäure hydrolysiert. Dreimalige Extraktion mit Diethylether, Ausschütteln der organischen Phase mit ges. NaHSO₃-Lösung, ges. NaHCO₃-Lösung und wenig Wasser, Trocknen über Na₂SO₄ und Einengen der Lösung führte zu einem farblosen Feststoff.
Ausbeute: 4,48 g (89 %)
MS: M⁺: 248 m/e (33 %)
M⁺-CH₃CO: 205 m/e (100 %)
NMR (CDCl₃, 600 MHz):

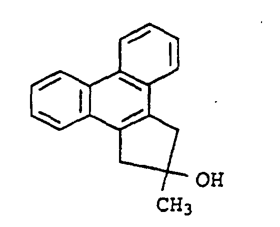

| Position | ¹H-Verschiebung | Multiplizität | Intensität | ¹³C-Verschiebung |
|---|---|---|---|---|
| 4,5 | 8,68-8,70 | m | 2 | 126,71 125,83 |
| 1-3, 6-8 | 7,77-7,79 | m | 2 | 124,76 123,22 |
| | 7,59-7,63 | m | 4 | |
| | | | | quart.C: 129,83 130,27 123,09 135,02 |
| OH(C-OH) | 1,98 | bs | 1 | 79,49 |
| CH₂ | 3,44 | 2d (J=15,8Hz) | 4 | 48,06 |
| Me | 1,981,66 | s | 3 | 28,46 |

### Herstellung von 1H-2-Methyl-cyclopenta[I]phenanthren

Die Entwässerung von 4,56 g 3-Hydro-2-hydroxy-2-methyl-1H-cyclopenta[I]-phenanthren (18,39 mmol) erfolgte durch einstündiges Erhitzen am Wasserabscheider mit 0,25 g p-Toluolsulfonsäure-Monohydrat in 300 ml Toluol. Die grünblaue Lösung verfärbte sich nach Verdünnen mit Diethylether rötlich. Es wurde mit ges. Natriumbicarbonatlösung ausgeschüttelt, über Magnesiumsulfat getrocknet und eingeengt. Man erhielt eine beigefarbene Substanz, welche durch Schnellfiltration über eine mit Flash-Kieselgel befüllte Glasfritte gereinigt werden konnte (Petrolether:Essigester).
Ausbeute: 4,02 g (95 %)
MS: M⁺: 230 m/e (100 %)
M⁺-Me: 215 m/e (38 %)

| Elementaranalyse: | | |
|---|---|---|
| C₁₈H₁₄ | | |
| C | (ber.) 93.87 | (gef.) 93,63 |
| H | (ber.) 6,13 | (gef.) 6,17 |

NMR (250 MHz):

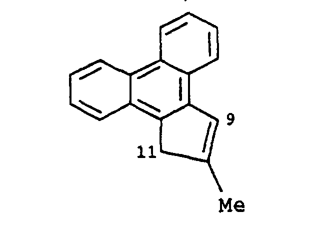

| Position | ¹H-Verschiebung | Multiplizität | Intensität | ¹³C-Verschiebung |
|---|---|---|---|---|
| 4,5 | 8,68-8,75 (8,56-8,62) | m | 2 | 126,65 126,27 |
| 1-3, 6-8 | 8,10-8,13(8,04-8,07) | m | 1 | 125,51 125,14 |
| | 7,93-7,95 (7,74-7,77) | m | 1 | 124,60 124,39 |
| | 7,53-7,65 (7,40-7,50) | m | 4 | 123,61 123,43 |
| 9 | 7,07 (6,90) | bs | 1 | 123,25 |
| quart. C: | | | | 127,50 128,30 |
| | | | | 129,64 130,19 |
| | | | | 137,05 140,22 |
| 11 | 3,74 (3,20) | s | 2 | 42,95 |
| Me | 2,33 (1,99) | bs | 3 | 16,94 |

### Herstellung von lH-2-Phenyl-cyclopenta[I]phenanthren

Zu 2 ml einer 3 M Lösung Phenylmagnesiumbromid in Diethylether (6 mmol) wurden bei 0°C 1 g 2,3-Dihydro-2-oxo-1H-cyclopenta[I]-phenanthren (4,31 mmol) in 100 ml Toluol zugetropft. Man ließ auf Raumtemperatur kommen und rührte 2 h. Nach Hydrolyse mit ges. Ammoniumchloridlösung wurde mit Diethylether extrahiert, die organische Phase mit ges. Kochsalzlösung gewaschen über Magnesiumsulfat getrocknet und zur Trockne eingeengt. Der Rückstand wurde in 100 ml Toluol aufgenommen und mit 100 mg p-Toluolsulfonsäure 2 h unter Rückfluß erhitzt. Nach Zugabe von ges. Natriumhydrogencarbonatlösung wurde mit Diethylether extrahiert, über Magnesiumsulfat getrocknet und eingeengt. Nach Flash-Chromatographie (Petrolether:Essigester = 50:1) erhielt man 1H-2-Phenyl-cyclopenta[I]phenanthren als farblose Nadeln.
Ausbeute: 4,50 g (36 %)
MS: M*⁺: 292 m/e (100 %)
M⁺-Ph: 215 m/e (6 %)

| Elementaranalyse: | | |
|---|---|---|
| C₂₃H₁₆ | | |
| C | (ber.) 94,48 | (gef.) 94,66 |
| H | (ber.) 5,52 | (gef.) 5,63 |

NMR (CDCl₃, 600 MHz):

| Position | ¹H-Verschiebung | Multiplizität | Intensität | ¹³C-Verschiebung |
|---|---|---|---|---|
| 1 | 8,02 | d (J=7,7Hz) | 1 | 123,84 |
| 2+3 | 7,62-7,56 | m | 2 | 126,85, 125,25 |
| 4 | 8,68 | d (J=8,2Hz) | 1 | 123,51 |
| 5 | 8,72 | d (J=7,1Hz) | 1 | 123,34 |
| 6+7 | 7,66-7,64 | m | 2 | 125,87, 126,50 |
| 8 | 8,20 | d (J=7,0Hz) | 1 | 124,29 |
| 9 | 7,79 | s | 1 | 124,43 |
| 11 | 4,20 | s | 2 | 39,22 |
| o-Ph | 7,75 | d (J=7,3Hz) | 2 | 125,50 |
| m-Ph | 7,42 | t (J=7,3Hz) | 2 | 128,79 |
| p-Ph | 7,29 | t (J=7,3Hz) | 1 | 127,39 |
| quarternäre C | | | | 146,43, 139,97 |
| | | | | 137,74, 136,03 |
| | | | | 130,33, 129,48 |
| | | | | 128,93, 127,56 |

### Generelle Herstellungsmethode für 1-Trimethylsilyl-cyclopenta[I]-phenanthrene

Das jeweilige Cyclopenta[I]phenanthren (10 mmol) wurde in 20 ml THF vorgelegt und unter Eiskühlung mit 10 mmol n-BuLi als 1,6 M Lösung in Hexan versetzt. Man ließ auf Raumtemperatur kommen und rührte über Nacht. Die dunkelgrüne Lösung wurde zur Trockne eingeengt und zweimal mit 20 ml Pentan gewaschen. Der zurückbleibende blaßgelbe bis blaßgrüne Feststoff wurde in 20 ml THF aufgenommen und bei Raumtemperatur mit 12 mmol Trimethylsilylchlorid versetzt. Die dunkelrote Lösung hellte sich nach Rühren über Nacht deutlich auf. Es wurde zur Trockne eingeengt und das Produkt durch Extraktion mit 40 ml Pentan und erneutem Einengen erhalten.

### 1-Trimethylsilyl-cyclopenta[I]phenanthren

Ausbeute: 2,05 g (90 %), gelbes Öl
MS: M⁺: 288 m/e (30 %)
M⁺-TMS: 215 m/e (10 %)
TMS: 73 m/e (100 %)
¹H-NMR (CDCl₃, 250 MHz):

| Position | ¹H-Verschiebung | Multiplizität | Intensität |
|---|---|---|---|
| Phenanthrengerüst | 8,75-8,70 | m | 2 |
| | 8,26-8,22 | m | 1 |
| | 8,01-7,97 | m | 1 |
| + Cp-H | 7,65-7,53 | m | 5 |
| Cp-H | 6,89-6,86 | m | 1 |
| Cp-H | 4,35 | bs | 1 |
| TMS | -0,05 | s | 9 |

### 1-Trimethylsilyl-2-methyl-cyclopenta[I]phenanthren

Ausbeute: 2,60 g (86 %), gelbes Öl
MS: M⁺: 302 m/e (40 %)
M⁺-TMS: 228 m/e (10 %)
TMS: 73 m/e (100 %)
¹H-NMR (CDCl₃, 250 MHz):

| Position | ¹H-Verschiebung | Multiplizität | Intensität |
|---|---|---|---|
| Phenanthrengerüst | 8,71-8,64 | m | 2 |
| | 8,15-8,12 | m | 1 |
| | 7,88-7,85 | m | 1 |
| | 7,63-7,48 | m | 4 |
| Cp-H | 7,13 | s | 1 |
| Cp-H | 4,15 | s | 1 |
| Me | 2,35 | s | 3 |
| TMS | -0,08 | s | 9 |

### 1-Trimethylsilyl-2-phenyl-cyclopenta[I]phenanthren

Ausbeute: 2,76 g (76 %), beiger Feststoff
MS: M⁺: 364 m/e (20 %)
M⁺-TMS: 291 m/e (7 %)
TMS: 73 m/e (65 %)
¹H-NMR (CDCl₃, 250 MHz):

| Position | ¹H-Verschiebung | Multiplizität | Intensität |
|---|---|---|---|
| Phenanthrengerüst | 8,73-8,68 | m | 2 |
| | 8,27-8,24 | m | 1 |
| | 8,04-8,00 | m | 1 |
| + Ph-H | 7,68-7,53 | m | 6 |
| Cp-H | 7,70 | s | 1 |
| Ph-H | 7,45-7,39 | m | 2 |
| Ph-H | 7,32-7,25 | m | 1 |
| Cp-H | 4,91 | s | 1 |
| TMS | -0,30 | s | 9 |

### Generelle Herstellungsmethode für Cyclopenta[Ilphenanthren-Titantrichlorid und Derivate

1-Trimethylsilyl-cyclopenta[I]phenanthren oder dessen 2-Methyl- oder 2-Phenylderivat (Ansatzgröße entsprechend der oben erhaltenen Mengen) wurde in 30 ml Methylenchlorid gelöst und bei 0°C mit einer äquimolaren Menge Titantetrachlorid versetzt. Die orangefarbene Lösung verfärbte sich sofort rotbraun. Nach 4 h Rühren bei Raumtemperatur wurde über Nacht auf -30°C gekühlt. Nach Abdekantieren der Lösung konnte das Produkt als dunkelroter Feststoff erhalten werden. Durch Einengen der Mutterlauge und erneutes Abkühlen konnte die Ausbeute erheblich verbessert werden.

Die Numerierung der folgenden Cyclopenta[I]phenanthrene in den NMR-Tabellen erfolgt nach dem allgemeinen Schema:

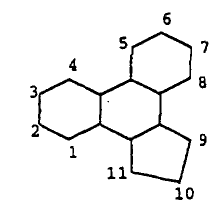

### Cyclopenta[I]phenanthren-titantrichlorid

Ausbeute: 1,76 g (53 %), roter Feststoff
MS: M⁺: 370 m/e (7 %)
M⁺-Cl: 333 m/e (1 %)
Lig-H: 215 m/e (100 %)

| Elementaranalyse: | | |
|---|---|---|
| C₁₇H₁₁TiCl₃ | | |
| C | (ber.) 55,26 | (gef.) 54,77 |
| H | (ber.) 3,00 | (gef.) 3,22 |

NMR (CDCl₃, 600 MHz): ¹H, ¹³C

| Position | ¹H-Verschiebung | Multiplizität | Intensität | ¹³C-Verschiebung |
|---|---|---|---|---|
| 4,5 | 8,56 | d (J=8,0Hz) | 2 | 124,07 |
| 2,3,6,7 | 7,73-7,67 | m | 4 | 128,32, 130,07 |
| 1,8 | 8,23 | d (J=7,4Hz) | 2 | 125,47 |
| 9,11 | 7,62 | d (J=3,3Hz) | 2 | 115,42 |
| 10 | 7,25 | t (J=3,3Hz) | 1 | 123,09 |
| quarternäre C | | | | 131,17, 131,10, |
| | | | | 127,57, ∼ 126 |

### 2-Methyl-cyclopenta[I]phenanthren-titantrichlorid

Ausbeute: 1,75 g (53 %), roter Feststoff
MS: M⁺: 384 m/e (8 %)
M⁺-Cl: 347 m/e (2 %)
M⁺-2Cl: 311 m/e (2 %)
MeLig-H: 229 m/e (100 %)

| Elementaranalyse: | | |
|---|---|---|
| C₁₈H₁₃TiCl₃ | | |
| C | (ber.) 56,37 | (gef.) 55,98 |
| H | (ber.) 3,42 | (gef.) 3,54 |

NMR (CDCl₃, 600 MHz): ¹H, ¹³C

| Position | ¹H-Verschiebung | Multiplizität | Intensität | ¹³C-Verschiebung |
|---|---|---|---|---|
| 4,5 | 8,54 | d(J=7,9Hz) | 2 | 124,02 |
| 2,3,6,7 | 7,71-7,65 | m | 4 | 128,25, 129,80 |
| 1,8 | 8,18 | d (J=7,6Hz) | 2 | 125,13 |
| 9,11 | 7,47 | s | 2 | 115,85 |
| Me | 2,73 | s | 3 | 18,87 |
| quarternäre C | | | | 131,64, 130,89, |
| | | | | 128,07, 125,19 |

### 2-Phenyl-cyclopenta[I]phenanthren-titanchlorid

Ausbeute: 2,23 g (66 %), roter Feststoff
MS: M⁺: 446 m/e (6 %)
PhLig-H: 291 m/e (100 %)

| Elementaranalyse: | | |
|---|---|---|
| C₂₃H₁₅TiCl₃ | | |
| C | (ber.) 61,99 | (gef.) 61,67 |
| H | (ber.) 3,39 | (gef.) 3,80 |

NMR (CDCl₃, 600 MHz): ¹H, ¹³C

| Position | ¹H-Verschiebung | Multiplizität | Intensität | ¹³C-Verschiebung |
|---|---|---|---|---|
| 4,5 | 8,57 | d(J=7,7Hz) | 2 | 124,46 |
| 2,3,6,7 | 7,74-7,69 | m | 4 | 128,66, 130,36 |
| 1,8 | 8,29 | d (J=7,4Hz) | 2 | 125,33 |
| 9,11 | 8,03 | s | 2 | 110,96 |
| o-Ph | 7,99 | d (J=7,4Hz) | 2 | 127,03 |
| m-Ph | 7,54 | t (J=7,4Hz) | 2 | 129,47 |
| p-Ph | 7,46 | t (J=7,4Hz) | 1 | 130,80 |

### Styrolpolymerisationen

In einem 300 ml Schlenkgefäß wurden 50 ml Toluol, 5 ml frisch über Calciumhydrid destilliertes Styrol und 6 ml Methylaluminoxan (MAO: 1,69 M in Toluol) auf die gewünschte Polymerisationstemperatur erhitzt und 10 Minuten gerührt. Der Titankatalysator (2,5 µmol, 1 ml einer 2,5 mM Lösung in Toluol) wurde mit einer Spritze zugegeben und die Reaktionslösung für 10 bis 20 Minuten gerührt (Al:Ti = 4000:1). Die Hydrolyse erfolgte durch Zugabe von 10 % HCl in Methanol, das ausgefallene Polystyrol wurde abfiltriert, mit weiterem Methanol gewaschen und über Nacht bei 100°C getrocknet. Ataktische Anteile wurden durch 24stündige Soxhlett-Extraktion mit 2-Butanon entfernt. Anschließend wurde das Polymer erneut über Nacht bei 100°C getrocknet und zur Bestimmung der syndiotaktischen Anteile gewogen. Die Polymerisationsergebnisse sind der folgenden Tabelle zu entnehmen.

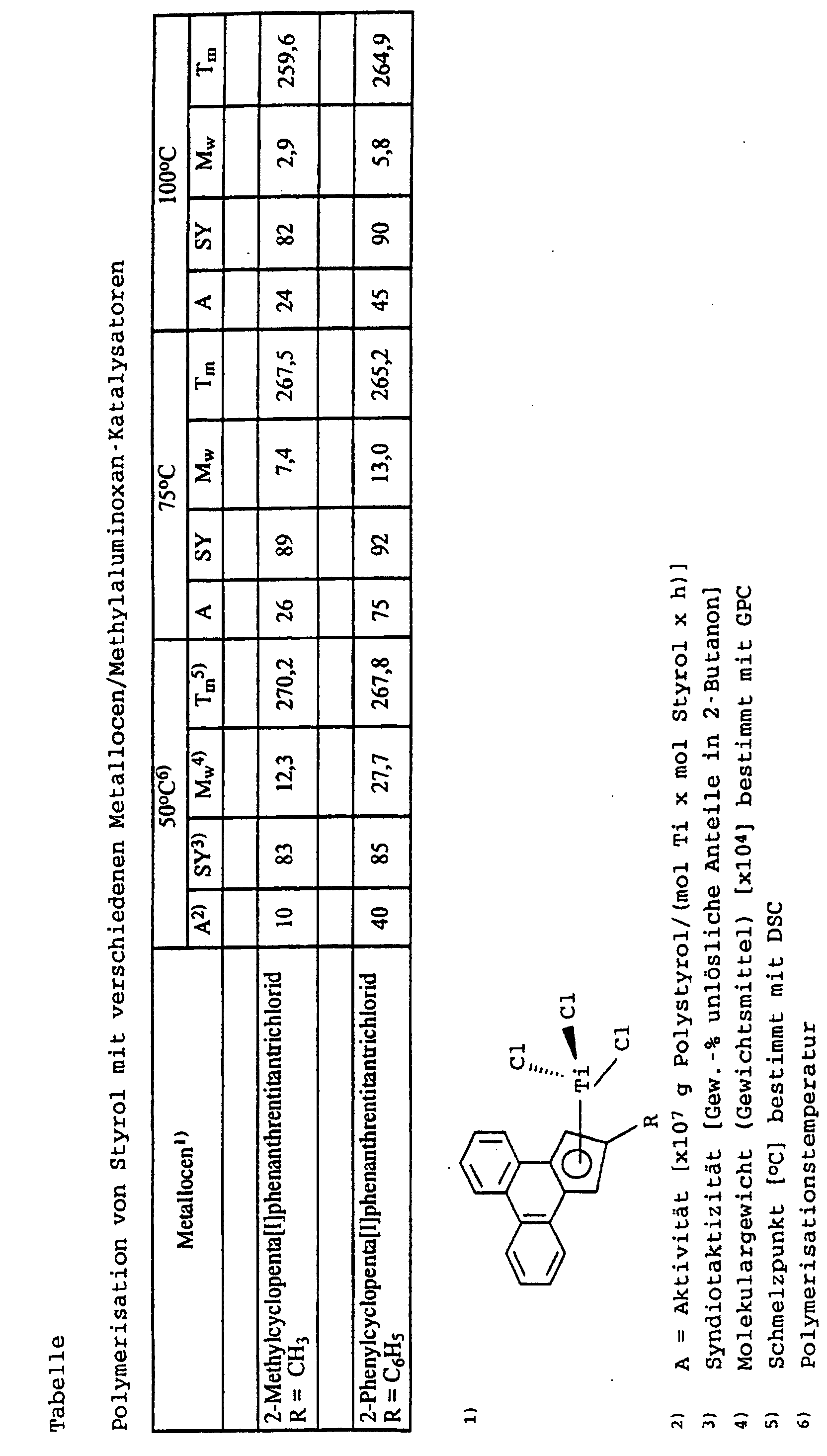

## Patentansprüche

1. Verfahren zur Herstellung von Polymeren, welchen Monomere mit C=C-Doppelbindung zugrunde liegen, durch Homo- oder Copolymerisation dieser Monomeren in Gegenwart eines Katalysatorsystems aus einem Metallocenkomplex A) und einer metalloceniumionenbildenden Verbindung B) und gegebenenfalls einer metallorganischen Verbindung der I., II., oder III. Hauptgruppe des Periodensystems der Elemente C), dadurch gekennzeichet, daß man als Metallocenkomplex A) eine Verbindung der allgemeinen Formel (I) 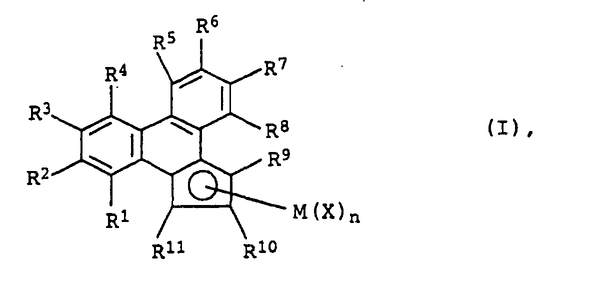 in der die Substituenten und Indices folgende Bedeutung haben:
R¹ bis R¹¹ Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
mit R¹² C₁- bis C₁₀-Alkyl, C₆- bis C₁₅-Aryl oder C₃- bis C₁₀-Cycloalkyl,
M ein Metall der III. bis VI. Nebengruppe des Periodensystems der Elemente oder ein Metall der Lanthanidenreihe
X gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
und
n 1, 2, 3, 4 oder 5, wobei n der Wertigkeit von M abzüglich der Zahl 1 entspricht,
einsetzt.

2. Verfahren zur Herstellung von Polymeren nach Anspruch 1, **dadurch gekennzeichnet, daß** die Polymere teilkristallin sind, syndiotaktische Struktureinheiten haben und man als Monomere vinylaromatische Verbindungen der allgemeinen Formel (II) 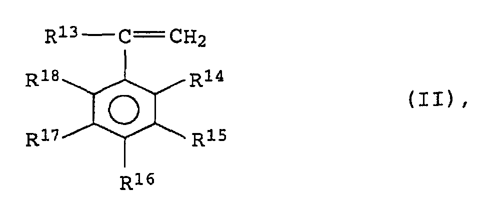 in der die Substituenten folgende Bedeutung haben:
R¹³ Wasserstoff oder C₁- bis C₄-Alkyl,
R¹⁴ bis R¹⁸ unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.
und gegebenenfalls, zusätzlich C₂- bis C₂₀-Alkene oder C₃- bis C₂₀-Cycloalkene verwendet.

3. Katalysatorsysteme, die zur Polymerisation von Monomeren mit C=C-Doppelbindung geeignet sind, enthaltend als aktive Bestandteile
A) einen Metallocenkomplex der allgemeinen Formel (I) 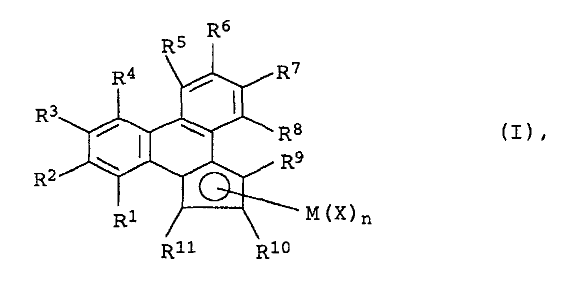 in der die Substituenten und Indices folgende Bedeutung haben:
R¹ bis R¹¹ Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
mit R¹² C₁- bis C₁₀-Alkyl, C₆- bis C₁₅-Aryl oder C₃- bis C₁₀-Cycloalkyl,
M ein Metall der III. bis VI. Nebengruppe des Periodensystems der Elemente oder ein Metall der Lanthanidenreihe
X gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
und
n 1, 2, 3, 4 oder 5, wobei n der Wertigkeit von M abzüglich der Zahl 1 entspricht,
B) einer metalloceniumionenbildenden Verbindung und gegebenenfalls C) einer metallorganischen Verbindung der I., II., oder III. Hauptgruppe des Periodensystems der Elemente.

4. Katalysatorsysteme nach Anspruch 3, wobei M ein Metall der IV. Nebengruppe des Periodensystems der Elemente ist.

5. Metallocenkomplexe der allgemeinen Formel (I) 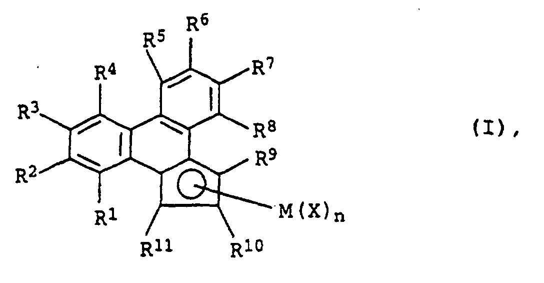 in der die Substituenten und Indices folgende Bedeutung haben:
R¹ bis R¹¹ Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
mit R¹² C₁- bis C₁₀-Alkyl, C₆- bis C₁₅-Aryl oder C₃- bis C₁₀-Cycloalkyl,
M ein Metall der III. bis VI. Nebengruppe des Periodensystems der Elemente oder ein Metall der Lanthanidenreihe
x gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
und
n 1, 2, 3, 4 oder 5, wobei n der Wertigkeit von M abzüglich der Zahl 1 entspricht,

6. Cyclopenta[I]phenanthrentitantrichlorid, 2-methylcyclopenfa[I]phenanthrentitantrichlorid, 2-phenylcyclopenta[I]phenanthrentitantrichlorid.

7. Polymere, welchen Monomere mit C=C-Doppelbindung zugrunde liegen, erhältlich durch Homo- oder Copolymerisation dieser Monomeren in Gegenwart eines Katalysatorsystems, enthaltend als aktive Bestandteile einen Metallocenkomplex A) und eine metalloceniumionenbildende Verbindung B) und gegebenenfalls eine metallorganische Verbindung der I., II., oder III. Hauptgruppe des Periodensystems der Elemente C), wobei man als Metallocenkomplex A) eine Verbindung der allgemeinen Formel (I) 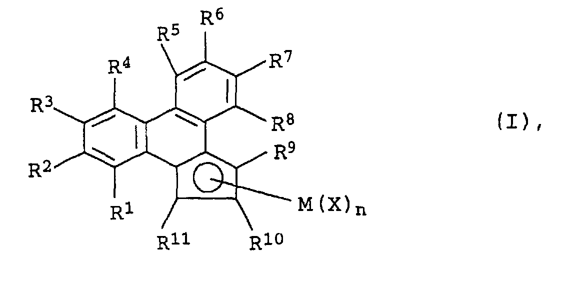 in der die Substituenten und Indices folgende Bedeutung haben:
R¹ bis R¹¹ Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste R¹ bis R⁸ gemeinsam für 4 bis 15 C-Atome aufweisende cyclische Gruppen stehen können, oder Si(R¹²)₃,
mit R¹² C₁- bis C₁₀-Alkyl, C₆- bis C₁₅-Aryl oder C₃- bis C₁₀-Cycloalkyl,
M ein Metall der III. bis VI. Nebengruppe des Periodensystems der Elemente oder ein Metall der Lanthanidenreihe
X gleich oder verschieden und Wasserstoff, Halogen, C₁- bis C₁₀-Alkyl, C₆- bis C₁₅-Aryl, C₁- bis C₁₀-Alkoxy oder C₆- bis C₁₅-Aryloxy
und
n 1, 2, 3, 4 oder 5, wobei n der Wertigkeit von M abzüglich der Zahl 1 entspricht,
einsetzt.

8. Fasern, Folien und Formkörper aus Polymeren gemäß Anspruch 7.

9. Verwendung von Metallocenkomplexen (I) gemäß den Ansprüchen 5 bis 6 als Komponente in Katalysatorsystemen oder als Katalysator.

## Claims

1. A process for preparing polymers based on monomers having a C=C double bond by homopolymerization or copolymerization of these monomers in the presence of a catalyst system comprising a metallocene complex A) and a compound B) capable of forming metallocenium ions and, if desired, an organometallic compound of main group I, II or III of the Periodic Table of the Elements C), wherein the metallocene complex A) used is a compound of the formula (I) 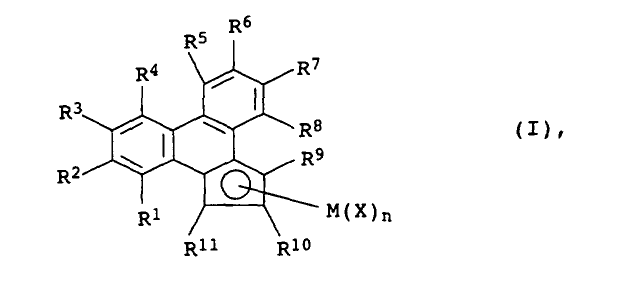 where the substituents and indices have the following meanings:
R¹ to R¹¹ are hydrogen, C₁-C₁₀-alkyl, 5- to 7-membered cycloalkyl which may in turn bear C₁-C₆-alkyl groups as substituents, C₆-C₁₅-aryl or arylalkyl, where two adjacent radicals R¹ to R⁸ may together form a cyclic group having from 4 to 15 carbon atoms, or Si(R¹²)₃,
where R¹² is C₁-C₁₀-alkyl, C₆-C₁₅-aryl or C₃-C₁₀-cycloalkyl,
M is a metal of transition groups III to VI of the Periodic Table of the Elements or a metal of the lanthanide series,
X are identical or different and are hydrogen, halogen, C₁-C₁₀-alkyl, C₆-C₁₅-aryl, C₁-C₁₀-alkoxy or C₆-C₁₅-aryloxy
and
n is 1, 2, 3, 4 or 5, where n corresponds to the valence of M minus 1.

2. A process for preparing polymers as claimed in claim 1, wherein the polymers are partially crystalline, have syndiotactic structural units and the monomers used are vinylaromatic compounds of the formula (II) 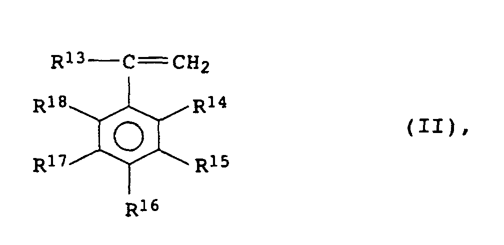 where the substituents have the following meanings:
R¹³ is hydrogen or C₁-C₄-alkyl,
R¹⁴ to R¹⁸ are, independently of one another, hydrogen, C₁-C₁₂-alkyl, C₆-C₁₈-aryl, halogen or two adjacent radicals together form a cyclic group having from 4 to 15 carbon atoms,
and, if desired, additionally C₂-C₂₀-alkenes or C₃-C₂₀-cycloalkenes.

3. A catalyst system which is suitable for polymerizing monomers having a C=C double bond and comprises as active constituents
A) a metallocene complex of the formula (I) 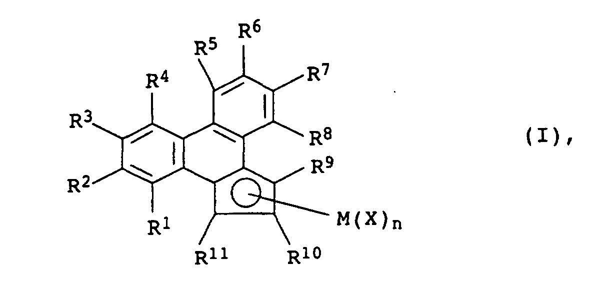 where the substituents and indices have the following meanings:
R¹ to R¹¹ are hydrogen, C₁-C₁₀-alkyl, 5- to 7-membered cycloalkyl which may in turn bear C₁-C₆-alkyl groups as substituents, C₆-C₁₅-aryl or arylalkyl, where two adjacent radicals R¹ to R⁸ may together form a cyclic group having from 4 to 15 carbon atoms, or Si(R¹²)₃,
where R¹² is C₁-C₁₀-alkyl, C₆-C₁₅-aryl or C₃-C₁₀-cycloalkyl,
M is a metal of transition groups III to VI of the Periodic Table of the Elements or a metal of the lanthanide series,
X are identical or different and are hydrogen, halogen, C₁-C₁₀-alkyl, C₆-C₁₅-aryl, C₁-C₁₀-alkoxy or C₆-C₁₅-aryloxy
and
n is 1, 2, 3, 4 or 5, where n corresponds to the valence of M minus 1,
B) a compound capable of forming metallocenium ions and, if desired, C) an organometallic compound of main group I, II or III of the Periodic Table of the Elements.

4. A catalyst system as claimed in claim 3, wherein M is a metal of transition group IV of the Periodic Table of the Elements.

5. A metallocene complex of the formula (I) 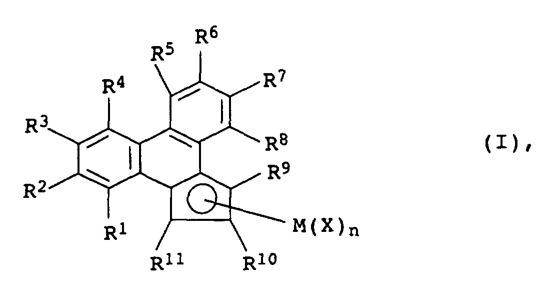 where the substituents and indices have the following meanings:
R¹ to R¹¹ are hydrogen, C₁-C₁₀-alkyl, 5- to 7-membered cycloalkyl which may in turn bear C₁-C₆-alkyl groups as substituents, C₆-C₁₅-aryl or arylalkyl, where two adjacent radicals R¹ to R⁸ may together form a cyclic group having from 4 to 15 carbon atoms, or Si(R¹²)₃,
where R¹² is C₁-C₁₀-alkyl, C₆-C₁₅-aryl or C₃-C₁₀-cycloalkyl,
M is a metal of transition groups III to VI of the Periodic Table of the Elements or a metal of the lanthanide series,
x are identical or different and are hydrogen, halogen, C₁-C₁₀-alkyl, C₆-C₁₅-aryl, C₁-C₁₀-alkoxy or C₆-C₁₅-aryloxy
and
n is 1, 2, 3, 4 or 5, where n corresponds to the valence of M minus 1.

6. Cyclopenta[I]phenanthrenetitanium trichloride, 2-methylcyclopenta[I]phenanthrenetitanium trichloride and 2-phenylcyclopenta[I]phenanthrenetitanium trichloride.

7. A polymer based on monomers having a C=C double bond, obtainable by homopolymerization or copolymerization of these monomers in the presence of a catalyst system comprising as active constituents a metallocene complex A) and a compound B) capable of forming metallocenium ions and, if desired, an organometallic compound of main group I, II or III of the Periodic Table of the Elements C), wherein the metallocene complex A) used is a compound of the formula (I) 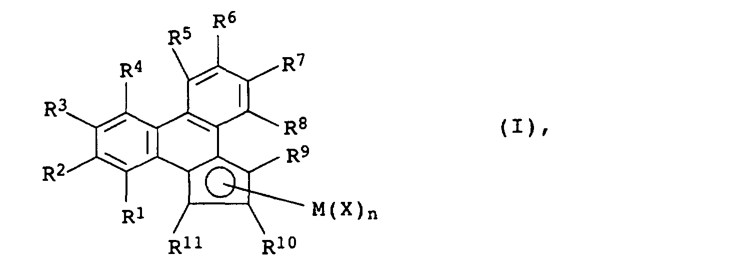 where the substituents and indices have the following meanings:
R¹ to R¹¹ are hydrogen, C₁-C₁₀-alkyl, 5- to 7-membered cycloalkyl which may in turn bear C₁-C₆-alkyl groups as substituents, C₆-C₁₅-aryl or arylalkyl, where two adjacent radicals R¹ to R⁸ may together form a cyclic group having from 4 to 15 carbon atoms, or Si(R¹²)₃,
where R¹² is C₁-C₁₀-alkyl, C₆-C₁₅-aryl or C₃-C₁₀-cycloalkyl,
M is a metal of transition groups III to VI of the Periodic Table of the Elements or a metal of the lanthanide series,
X are identical or different and are hydrogen, halogen, C₁-C₁₀-alkyl, C₆-C₁₅-aryl, C₁-C₁₀-alkoxy or C₆-C₁₅-aryloxy
and
n is 1, 2, 3, 4 or 5, where n corresponds to the valence of M minus 1.

8. A fiber, film or molding comprising a polymer as claimed in claim 7.

9. The use of a metallocene complex (I) as claimed in claim 5 or 6 as a component in catalyst systems or as a catalyst.

## Revendications

1. Procédé de préparation de polymères à base de monomères comportant des doubles liaisons C=C, par homopolymérisation ou copolymérisation de ces monomères en présence d'un système catalytique à base d'un complexe de métallocène A) et d'un composé B) formant des ions métallocénium et éventuellement d'un composé organométallique C) des groupes I, II ou III du système périodique des éléments, **caractérisé en ce que** l'on met en oeuvre comme complexe métallocène A) un composé de la formule générale (I) 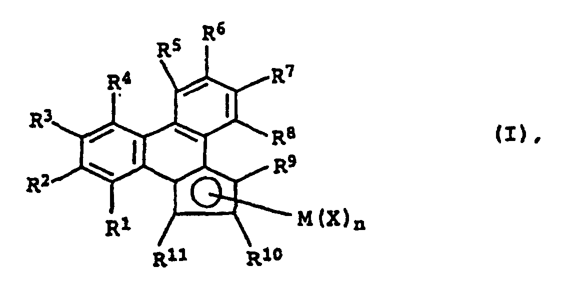 dans laquelle les substituants et indices ont les significations suivantes:
R¹ à R¹¹ peuvent représenter de l'hydrogène ou un radical alkyle en C₁ à C₁₀, cycloalkyle pentagonal à heptagonal, qui peut de son côté porter des radicaux alkyle en C₁ à C₆ comme substituants, aryle en C₆ à C₁₅ ou arylalkyle, et où éventuellement deux restes R¹ à R⁸ voisins peuvent également former ensemble des groupes cycliques comportant de 4 à 15 atomes de carbone, ou bien Si(R¹²)₃,
avec R¹² représentant un radical alkyle en C₁ à C₁₀, aryle en C₆ à C₁₅ ou cycloalkyle en C₃ à C₁₀,
M est un métal des sous-groupes III à VI du système périodique des éléments ou un métal de la série des lanthanides,
X sont identiques ou différents et représentent de l'hydrogène, un halogène, ou un radical alkyle en C₁ à C₁₀, aryle en C₆ à C₁₅, alcoxy en C₁ à C₁₀ ou aryloxy en C₆ à C₁₅
et
n a une valeur de 1, 2, 3, 4 ou 5, où n correspond à la valence de M moins le chiffre 1.

2. Procédé de préparation de polymères selon la revendication 1, **caractérisé en ce que** les polymères sont partiellement cristallins, présentent des unités structurelles syndiotactiques et que l'on utilise comme monomères des composés vinylaromatiques de la formule générale (II) 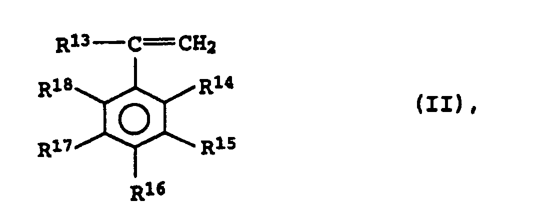 dans laquelle les substituants ont les significations suivantes:
R¹³ représente de l'hydrogène ou un radical alkyle en C₁ à C₄,
R¹⁴ à R¹⁸ représentent indépendamment l'un de l'autre de l'hydrogène, ou un radical alkyle en C₁ à C₁₂, aryle en C₆ à C₁₈, un halogène, ou bien où deux restes voisins représentent ensemble des groupes cycliques présentant de 4 à 15 atomes de carbone,
et éventuellement, additionnellement des alcènes en C₂ à C₂₀ ou des cycloalcènes en C₃ à C₂₀.

3. Systèmes catalytiques convenant à la polymérisation de monomères à double liaison C=C, contenant comme constituants actifs
A) un complexe métallocène de la formule générale (I) 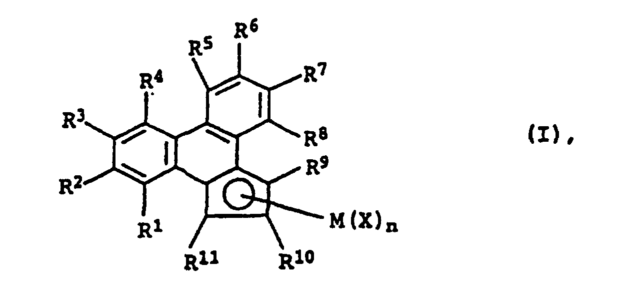 où les substituants et indices ont les significations suivantes:
R¹ à R¹¹ peuvent représenter de l'hydrogène ou un radical alkyle en C₁ à C₁₀, cycloalkyle pentagonal à heptagonal, qui peut de son côté porter des radicaux alkyle en C₁ à C₆ comme substituants, aryle en C₆ à C₁₅ ou arylalkyle, et où éventuellement deux restes R¹ à R⁸ voisins peuvent également former ensemble des groupes cycliques comportant de 4 à 15 atomes de carbone, ou bien Si(R¹²)₃,
avec R¹² représentant un radical alkyle en C₁ à C₁₀, aryle en C₆ à C₁₅ ou cycloalkyle en C₃ à C₁₀,
M est un métal des sous-groupes III à VI du système périodique des éléments ou un métal de la série des lanthanides,
X sont identiques ou différents et représentent de l'hydrogène, un halogène, ou un radical alkyle en C₁ à C₁₀, aryle en C₆ à C₁₅, alcoxy en C₁ à C₁₀ ou aryloxy en C₆ à C₁₅
et
n a une valeur de 1, 2, 3, 4 ou 5, où n correspond à la valence de M moins le chiffre 1,
B) un composé formant des ions métallocénium et éventuellement C) un composé organométallique des groupes I, II ou III du système périodique des éléments.

4. Systèmes catalytiques selon la revendication 3, où M est un métal du IVème sous-groupe du système périodique des éléments.

5. Complexes métallocènes de la formule générale (I) 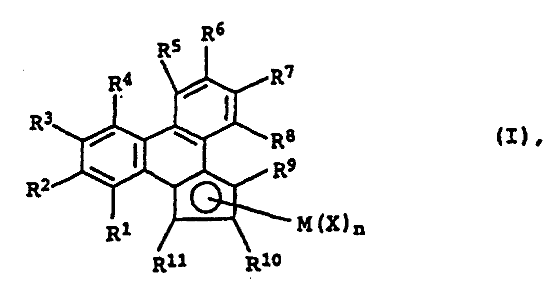 où les substituants et indices ont les significations suivantes:
R¹ à R¹¹ peuvent représenter de l'hydrogène ou un radical alkyle en C₁ à C₁₀, cycloalkyle pentagonal à heptagonal, qui peut de son côté porter des radicaux alkyle en C₁ à C₆ comme substituants, aryle en C₆ à C₁₅ ou arylalkyle, et où éventuellement deux restes R¹ à R⁸ voisins peuvent également former ensemble des groupes cycliques comportant de 4 à 15 atomes de carbone, ou bien Si(R¹²)₃,
avec R¹² représentant un radical alkyle en C₁ à C₁₀, aryle en C₆ à C₁₅ ou cycloalkyle en C₃ à C₁₀,
M est un métal des sous-groupes III à VI du système périodique des éléments ou un métal de la série des lanthanides,
X sont identiques ou différents et représentent de l'hydrogène, un halogène, ou un radical alkyle en C₁ à C₁₀, aryle en C₆ à C₁₅, alcoxy en C₁ à C₁₀ ou aryloxy en C₆ à C₁₅
et
n a une valeur de 1, 2, 3, 4 ou 5, où n correspond à la valence de M moins le chiffre 1.

6. Trichlorure de cyclopenta[l]phénanthrènetitane, de trichlorure de 2-méthylcyclopenta[l]phénanthrènetitane, de trichlorure de 2-phénylcyclopenta[I]phénanthrènetitane.

7. Polymères à base de monomères à double liaison C=C, que l'on peut obtenir par homopolymérisation ou copolymérisation de ces monomères en présence d'un système catalytique contenant comme constituants réactifs un complexe métallocène A) et un composé B) formant des ions métallocénium et éventuellement d'un composé organométallique C) des groupes I, II ou III du système périodique des éléments, où l'on met en oeuvre comme composé métallocène A) un composé de la formule générale (I) 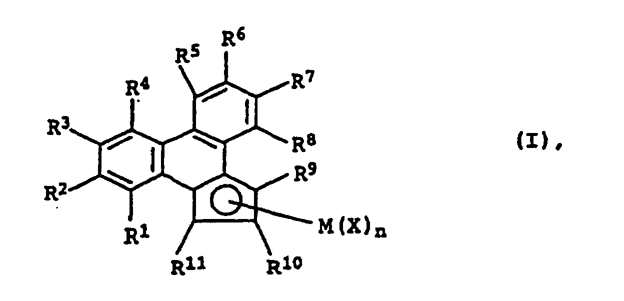 dans lequel les substituants et indices ont les significations suivantes:
R¹ à R¹¹ peuvent représenter de l'hydrogène ou un radical alkyle en C₁ à C₁₀, cycloalkyle pentagonal à heptagonal, qui peut de son côté porter des radicaux alkyle en C₁ à C₆ comme substituants, aryle en C₆ à C₁₅ ou arylalkyle, et où éventuellement deux restes R¹ à R⁸ voisins peuvent également former ensemble des groupes cycliques comportant de 4 à 15 atomes de carbone, ou bien Si(R¹²)₃,
avec R¹² représentant un radical alkyle en C₁ à C₁₀, aryle en C₆ à C₁₅ ou cycloalkyle en C₃ à C₁₀,
M est un métal des sous-groupes III à VI du système périodique des éléments ou un métal de la série des lanthanides,
X sont identiques ou différents et représentent de l'hydrogène, un halogène, ou un radical alkyle en C₁ à C₁₀, aryle en C₆ à C₁₅, alcoxy en C₁ à C₁₀ ou aryloxy en C₆ à C₁₅
et
n a une valeur de 1, 2, 3, 4 ou 5, où n correspond à la valence de M moins le chiffre 1.

8. Fibres, feuilles et corps façonnés à partir des polymères selon la revendication 7.

9. Utilisation des complexes métallocènes (I) selon les revendications 5 à 6 comme composants dans des systèmes catalytiques ou comme catalyseurs.
